# EUROPÄISCHE PATENTSCHRIFT

(11) **EP 2 130 185 B1**
(45) Veröffentlichungstag und Bekanntmachung des Hinweises auf die Patenterteilung: **26.11.2014**
(21) Anmeldenummer: 08708850.6
(22) Anmeldetag: 11.02.2008
(51) Int. Cl.: G07C 7/00, G06K 7/00, G06K 13/08

(54) **KARTENAUFNAHMEVORRICHTUNG**
DEVICE FOR RECEIVING A CARD
DISPOSITIF DE RÉCEPTION DE CARTE

(30) Priorität: 19.03.2007 DE 102007013677
(43) Veröffentlichungstag der Anmeldung: 09.12.2009
(73) Patentinhaber: Continental Automotive GmbH, 30165 Hannover (DE)
(72) Erfinder: WAHLER, Torsten, 78073 Bad Dürrheim (DE); WOLF, Peter, 78078 Niedereschach (DE)
(86) Internationale Anmeldenummer: PCT/EP2008/051588
(87) Internationale Veröffentlichungsnummer: WO 2008/113643

(56) Entgegenhaltungen:
- WO-A-2004/100076
- WO-A-2008/025739
- DE-A1- 3 717 684
- DE-A1- 3 929 141
- DE-A1- 3 930 953

## Beschreibung

Die Erfindung bezieht sich auf eine Kartenaufnahmevorrichtung, insbesondere für einen Fahrtschreiber in einem Kraftfahrzeug, mit einer Aufnahmeöffnung, durch die eine Karte in einen Aufnahmeschacht einführbar ist, wobei die Karte einen Datenspeicher aufweist, der bei vollständig in dem Kartenschacht befindlicher Karte mit feststehenden Kontakten kontaktierbar und mit einer elektronischen Lese- und Speichereinheit verbindbar ist, mit einer Verriegelungseinheit, die mindestens ein als Verriegelungshebels ausgebildetes Verriegelungselement aufweist, das zwischen einer Entriegelungsstellung und einer Verriegelungsstellung bewegbar ist und durch das ein Verriegelungsteil zwischen einer Einführstellung und einer Verschlussstellung bewegbar antreibbar ist, wobei durch das bei vollständig in den Aufnahmeschacht eingeführter Karte in der Verschlussstellung befindliche Verriegelungsteil die Aufnahmeöffnung verschlossen und das Verriegelungsteil in der Verschlussstellung arretierbar ist und die Verriegelungseinheit einen um eine Schwenkachse zwischen einer Entriegelungsstellung und einer Verriegelungsstellung schwenkbar antreibbaren Verriegelungshebel aufweist, an dessen einem Endbereich das Verriegelungsteil angeordnet ist, durch das in der Verriegelungsstellung das nach außen gerichtete Ende der vollständig in dem Kartenschacht befindlichen Karte hakenartig hintergriffen ist und wobei ein Arretierschieber auf dem Verriegelungshebel annähernd tangential zur Drehbewegung des Stellhebels zwischen einer Entarretierstellung und einer Arretierstellung verschiebbar geführt ist.

Derartige digitale Kartenaufnahmevorrichtungen von digitalen Fahrtschreibern verwenden als Karte eine Chipkarte, wobei bei in die Kartenaufnahmevorrichtung eingeführter Chipkarte ein Austausch von fahrer- und fahrzeugspezifischen Daten zwischen der Chipkarte und der Lese- und Speichereinheit erfolgt. Während der Aufzeichnung von Daten bei der Benutzung des Fahrzeugs darf die Chipkarte unter keinen Umständen von außen entnommen oder aus der Kartenaufnahmevorrichtung ausgeworfen werden können.

Dabei muss die Chipkarte vollständig in die Kartenaufnahmevorrichtung eingeführt und verriegelt werden und die Verriegelung muss absolut sicher gegen Manipulation sein.

Dies ist zu überwachen.

Dabei soll die Kartenaufnahmevorrichtung ein geringes Bauvolumen, insbesondere eine geringe Bauhöhe aufweisen und einen einfachen Aufbau besitzen.

Aus der WO 2004/100076 A ist eine Kartenaufnahmevorrichtung der eingangs genannten Art bekannt. Dabei ist der Verriegelungshebel zweiteilig mit einem Verriegelungshebel und einem in Verriegelungsrichtung federbelasteten Verriegelungsteil ausgebildet. Das Verriegelungsteil trägt eine Blende, die in Verriegelungsstellung des Verriegelungsteils unabhängig von der Stellung der Arretierung einen optischen Schalter betätigt.

Aus der WO 2008/025739 A ist eine Kartenaufnahmevorrichtung der eingangs genannten Art bekannt, bei der zwei als Reflexionsschalter ausgebildete optischer Schalter zwei verschiedene Signale erzeugen. Von dem ersten Schalter wird die Verriegelungsposition des Verriegelungsteils und von dem anderen Schalter die Arretierposition des Arretierteils detektiert.

Aufgabe der Erfindung ist es daher eine Kartenaufnahmevorrichtung der eingangs genannten Art zu schaffen, die bei einfachem Aufbau mit geringem Bauvolumen eine korrekte Funktion gewährleistet.

Diese Aufgabe wird erfindungsgemäß dadurch gelöst, dass ein erster Schalter bei Befinden des arretierten Verriegelungsteils in der Verschlussstellung schaltbar und ein erstes Schaltsignal auslösbar ist, wobei der Schalter ein fest angeordneter optischer Schalter mit einem Lichtempfänger und einer Lichtquelle ist und der von der Lichtquelle zum Lichtempfänger gerichtete Lichtstrahl durch ein Schaltelement unterbrechbar ist, das an dem freien Ende eines sich annähernd in Bewegungsrichtung der Karte erstreckenden Federarms des Arretierschiebers angeordnet ist, wobei durch den Endhub des Arretierschiebers in seine Arretierstellung das Schaltelement in seine den Lichtstrahl unterbrechende Position bewegbar ist und wobei der Federarm auch eine von der Bewegungsrichtung des Arretierschiebers abweichende, durch eine Führung des Schaltelements bestimmte Bewegung des Schaltelements durchführt.

Dies führt zu einem einfachen, bauteilreduzierten Aufbaugeringen Bauvolumens.

Da das erste Schaltsignal nur dann ausgelöst ist, wenn sich sowohl die Karte vollständig im Kartenschacht befindet als auch die Verriegelung vollständig durchgeführt ist, ist sichergestellt, dass der Einführvorgang der Karte korrekt erfolgt ist und die Karte auch einwandfrei verriegelt ist.

Um ein Fehlschalten durch Streulicht zu vermeiden, kann der Lichtempfänger in einem Lichtkasten angeordnet sein, der eine zur Lichtquelle gerichtete Blendenöffnung aufweist, so dass nur durch die Blendenöffnung zum Lichtempfänger gelangendes Licht wirksam werden kann, dessen Lichtstrahl von dem Schaltelement sicher unterbrechbar ist.

Um eine exakte Positionierung des Schaltelements sowohl in seiner strahlunterbrechenden als auch nichtstrahlunterbrechenden Stellung zu gewährleisten, kann das Schaltelement in einer Führung in den Weg des Lichts des optischen Schalters bewegbar geführt sein.

Ist die Karte nur unwesentlich nicht vollständig in den Aufnahmeschacht eingeführt, so erfolgt bei der Bewegung des Verriegelungsteils in die Verschlussstellung selbsttätig ein Bewegen in die vollständig eingeführte Lage, wenn das Verriegelungsteil in der Verschlussstellung mit einer zur Bewegungsrichtung der Karte rampenartig geneigten Anlagefläche an dem nach außen gerichteten Ende der vollständig in dem Kartenschacht befindlichen Karte in Anlage ist.

Vorzugsweise ist dabei der Verriegelungshebel von einem um eine sich quer zur Bewegungsrichtung der Karte erstreckende Achse reversierbar schwenkbar antreibbaren Stellhebel zwischen der Entriegelungsstellung und der Verriegelungsstellung schwenkbar antreibbar.

In einfacher bauraumsparender Weise kann dazu der Verriegelungshebel eine Kulissenführung aufweisen, in die parallel zur Achse gerichteter Zapfen des Stellhebels ragt und durch Drehung des Stellhebels der Verriegelungshebel durch den Zapfen schwenkbar antreibbar ist.

Zum Arretieren des Verriegelungsteils in seiner Verschlussstellung kann der Arretierschieber einen ersten Anschlag aufweist, der bei Bewegung des Verriegelungshebels in die Verriegelungsstellung nach Erreichen der Verriegelungsstellung von einem radial sich erstreckenden Steuerelement des Stellhebels zur Arretierstellung hin bewegbar beaufschlagbar ist und der einen zweiten Anschlag aufweiset, der bei Bewegung des Verriegelungshebels in die Entriegelungsstellung von dem Steuerelement zur Entarretierstellung hin bewegbar beaufschlagbar ist.

Damit wird bauteilsparend sowohl der Verriegelungshebel als auch der Arretierschieber durch den Stellhebel angetrieben. Zum Einführen der Karte in die Kartenaufnahmevorrichtung ist vorzugsweise die Karte manuell in einen in einer Aufnahmeposition befindlichen Schritten einführbar und von dem bewegbar geführten Schlitten aus der Aufnahmeposition in die die Kontakte kontaktierende Kontaktposition im Aufnahmeschacht sowie von der Kontaktposition in die Aufnahmeposition transportierbar.

Damit dazu ein angetriebener Einzug erfolgt, kann der Schlitten von einem reversierbaren Antrieb, insbesondere von einem elektromotorischen Antrieb bewegbar antreibbar sein.

In einfacher Ausbildung kann dabei der Schlitten eine sich in Bewegungsrichtung der Karte erstreckende Zahnstange aufweisen, in die ein reversierbar drehbar antreibbares Ritzel eingreifbar ist.

Sind der Stellhebel und das Ritzel von dem Antrieb um die Achse drehbar antreibbar, wobei der Stellhebel während des Schlittenantriebs und der Schlitten während des Stellhebelantriebs vom Antrieb entkoppelt ist, so erfolgt von einer gemeinsamen Antriebseinheit der Antrieb sowohl des Schwenkhebels und damit der Verriegelungseinheit, als auch die Einzugs- und Ausschubbewegung der Karte.

Zum Einführen der Karte in die Kartenaufnahmeeinrichtung kann die Karte bis zur Anlage an einem Anschlag in den Schlitten einführbar und nach Erreichen des Anschlags ein zweites Schaltsignal auslösbar sein, durch das der Antrieb einschaltbar ist, der dann für den Weitertransport der Karte sorgt.

Dazu kann nach Erreichen des Anschlags von dem Schlitten ein zweiter Schalter zur Auslösung des zweiten Schaltsignals betätigbar sein.

Damit nach einem Karteneinzug und dem Erreichen der Verschlussstellung des Verriegelungsteils der Antrieb ausgeschaltet wird, ist vorzugsweise von dem ersten Schaltsignal der Antrieb ausschaltbar.

Bei Nichtvorliegen des ersten Schaltsignals kann nach einer von einem Zeitglied bestimmten Zeit nach Beginn des Antriebs des Stellhebels die Antriebsrichtung des Antriebs umkehrbar sein.

Zu einem Nichtvorliegen des ersten Schaltsignals kann es kommen, wenn die Karte während des Einzugs von dem Bediener festgehalten und somit nicht vollständig eingezogen wird.

Ein Ausführungsbeispiel der Erfindung ist in der Zeichnung dargestellt und wird im Folgenden näher beschrieben. Es zeigen
- Figur 1: eine perspektivische Ansicht einer Kartenaufnahmevorrichtung mit nichteingeführter Karte;
- Figur 2: die Kartenaufnahmevorrichtung nach Figur 1 mit eingeführter Karte;

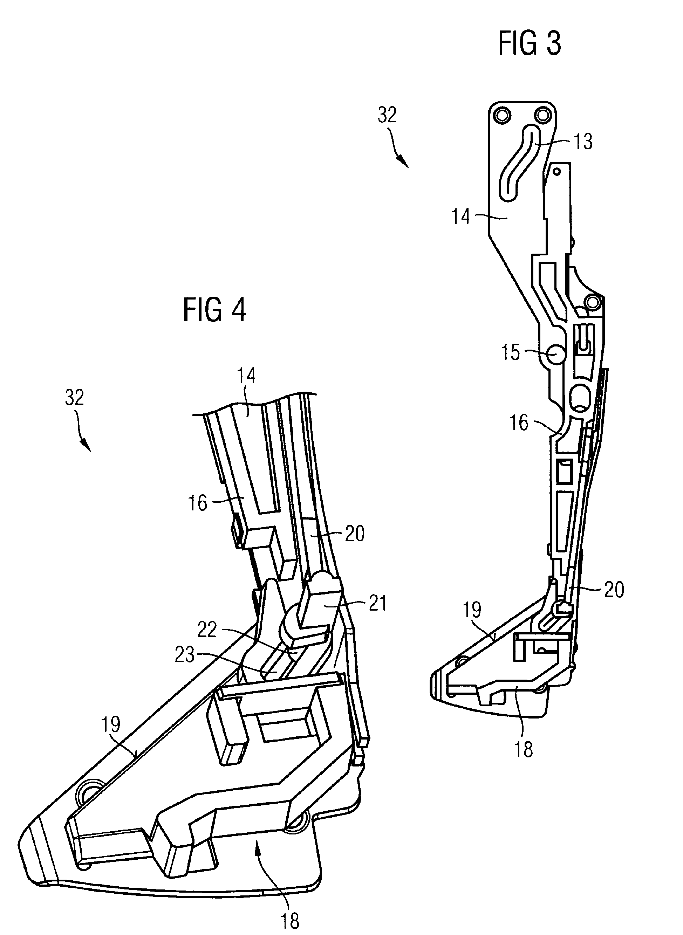

- Figur 3: eine Ansicht einer Verriegelungseinheit der Kartenaufnahmevorrichtung nach Figur 1 in der Entriegelungsstellung;
- Figur 4: eine vergrößerte Darstellung der Verriegelungseinheit nach Figur 3 im Bereich eines Verriegelungsteils;

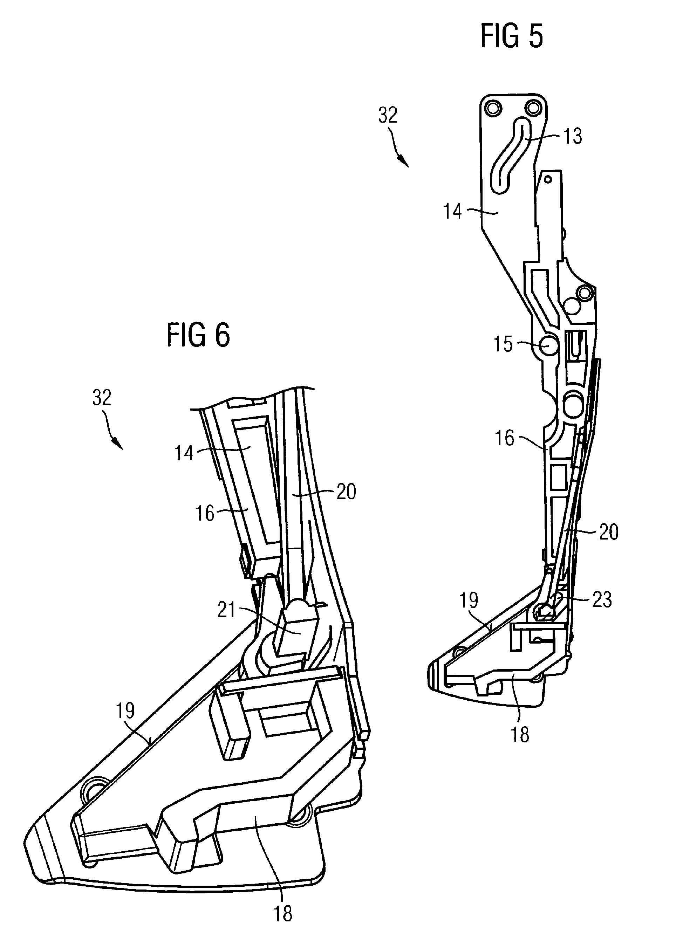

- Figur 5: eine Ansicht der Verriegelungseinheit der Kartenaufnahmevorrichtung nach Figur 1 in der Verriegelungsstellung;
- Figur 6: eine vergrößerte Darstellung der Verriegelungseinheit nach Figur 5 im Bereich des Verriegelungsteils;

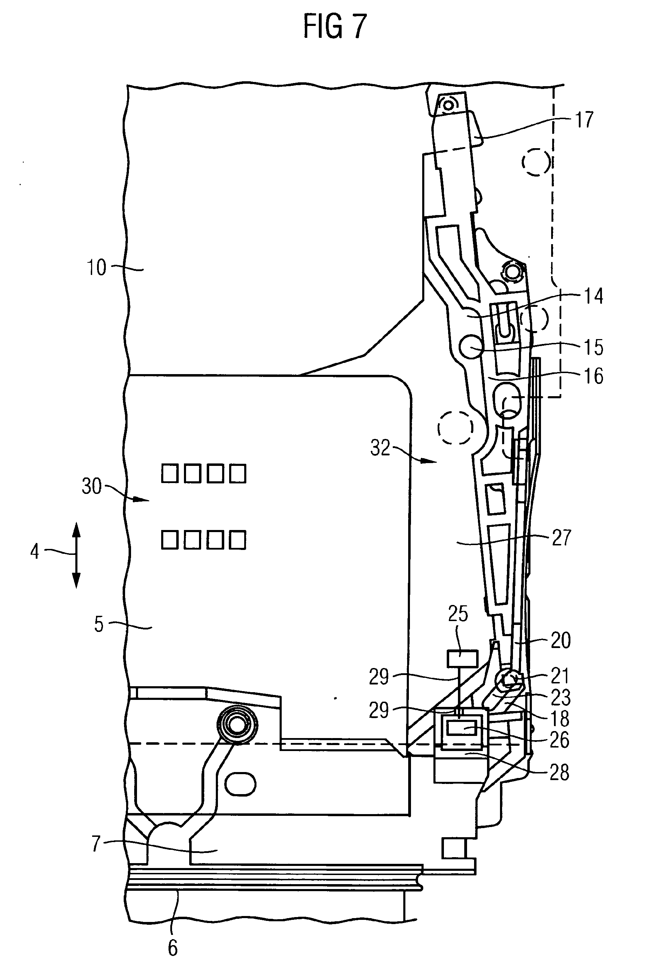

- Figur 7: eine Draufsicht auf die Seite der Verriegelungseinheit der Kartenaufnahmevorrichtung mit teileingeführter Karte in Entriegelungsstellung;

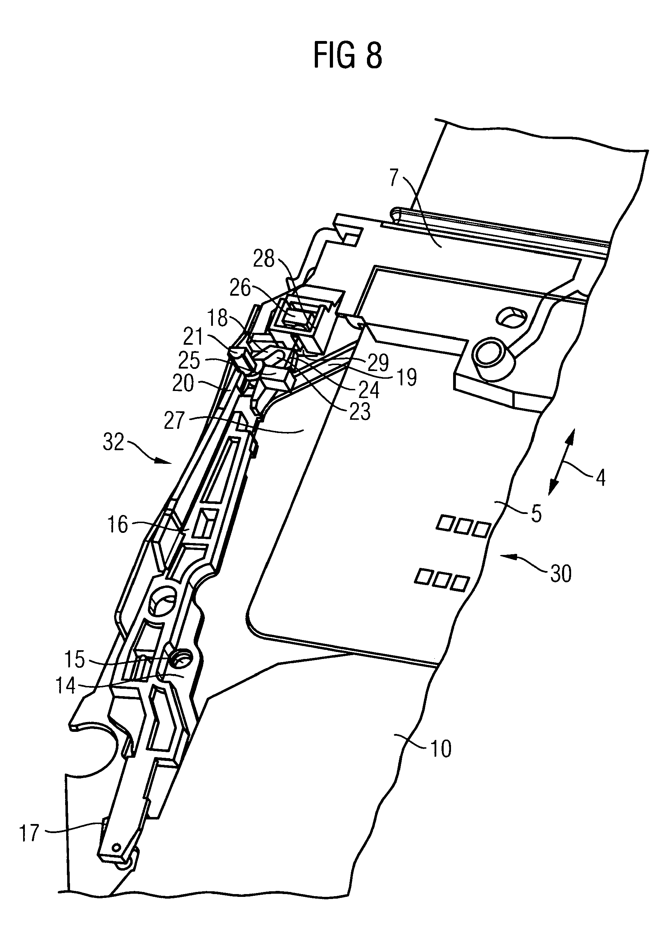

- Figur 8: eine perspektivische Darstellung der Figur 7;

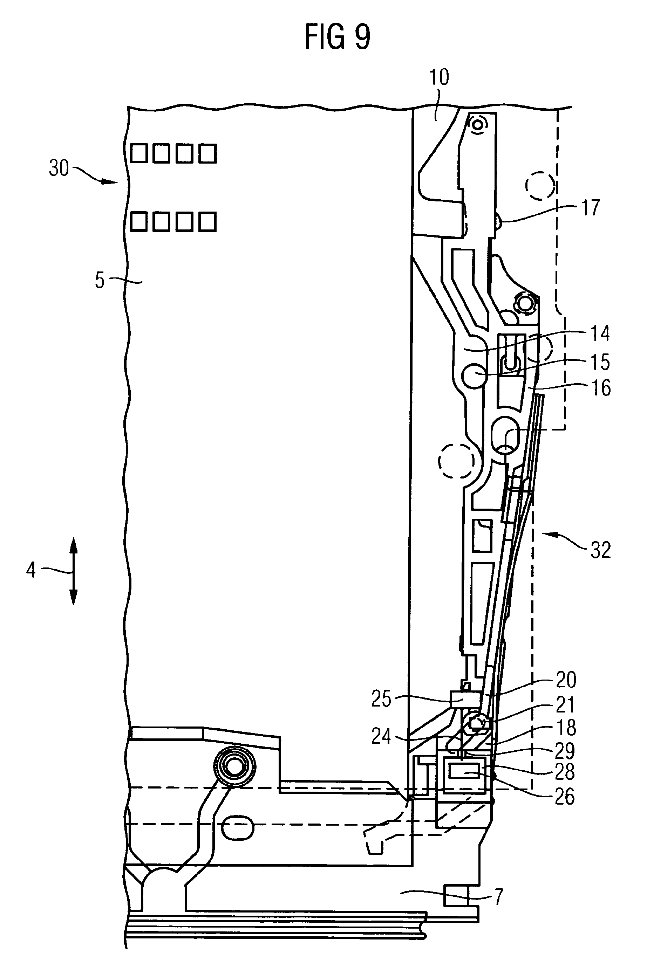

- Figur 9: eine Draufsicht auf die Seite der Verriegelungseinheit der Kartenaufnahmevorrichtung mit eingeführter Karte in nicht arretierter Verriegelungsstellung;

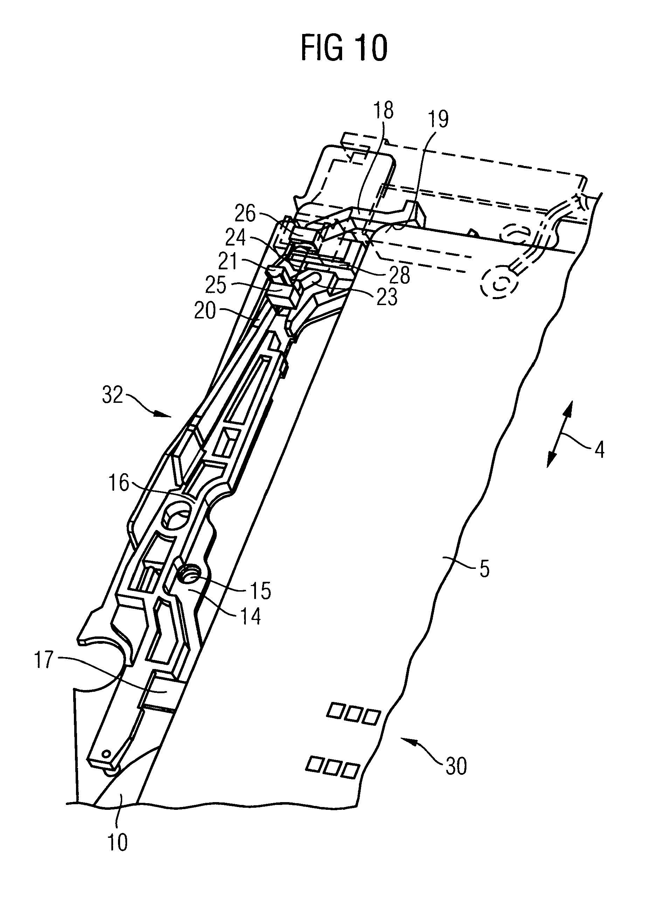

- Figur 10: eine perspektivische Darstellung der Figur 9;

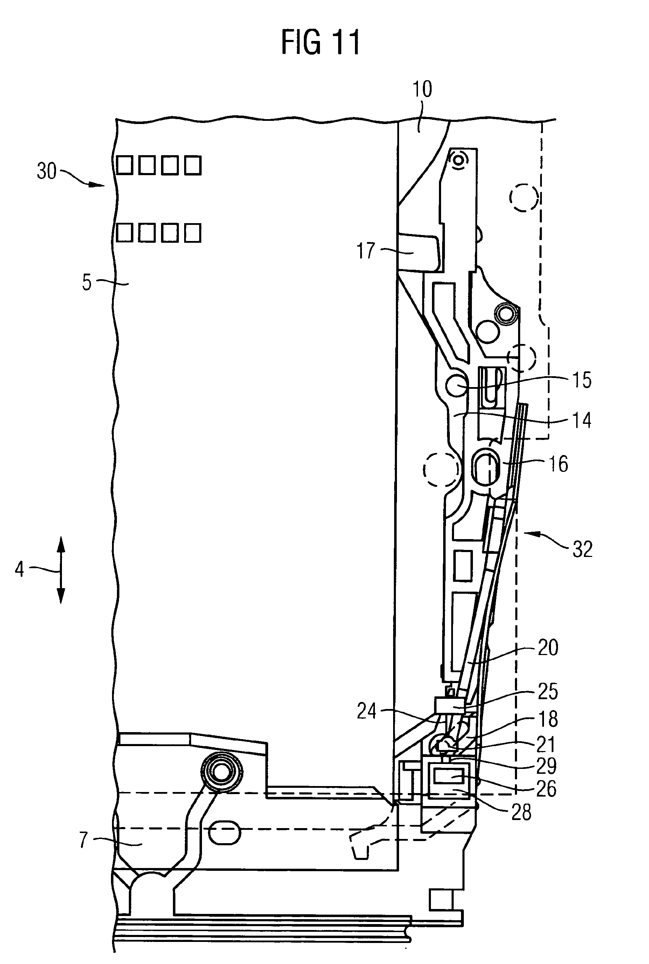

- Figur 11: eine Draufsicht auf die Seite der Verriegelungseinheit der Kartenaufnahmevorrichtung mit eingeführter Karte in arretierter Verriegelungsstellung;

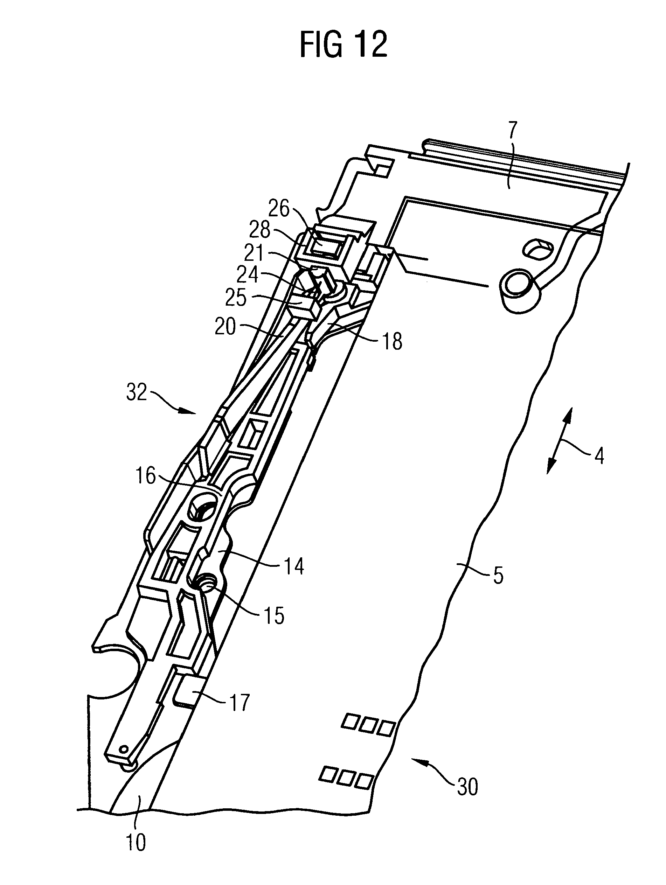

- Figur 12: eine perspektivische Darstellung der Figur 11;

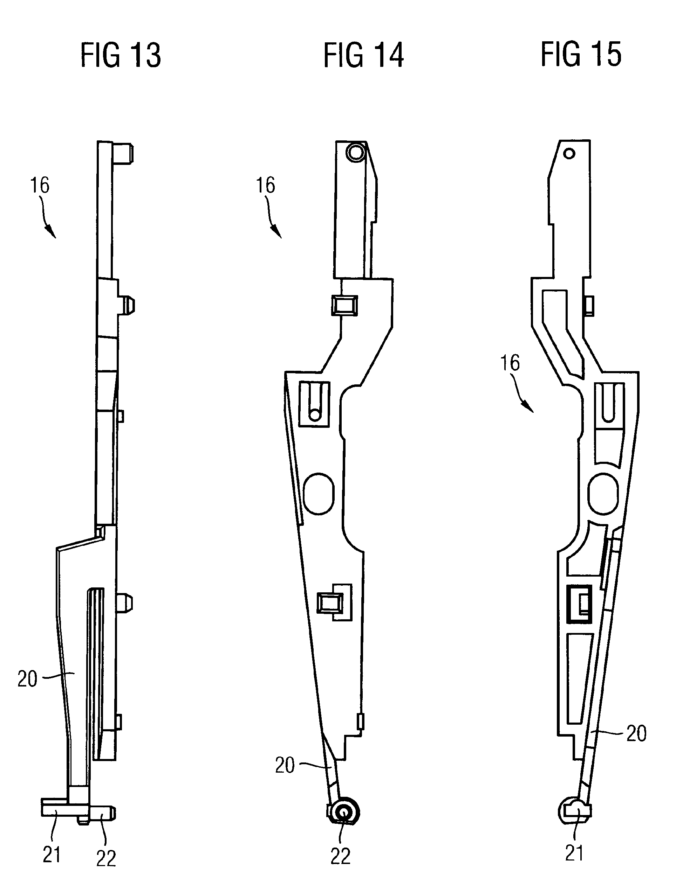

- Figur 13: eine Ansicht eines Verriegelungshebels;
- Figur 14: eine Seitenansicht des Verriegelungshebels nach Figur 13;
- Figur 15: eine Rückansicht des Verriegelungshebels nach Figur 13;

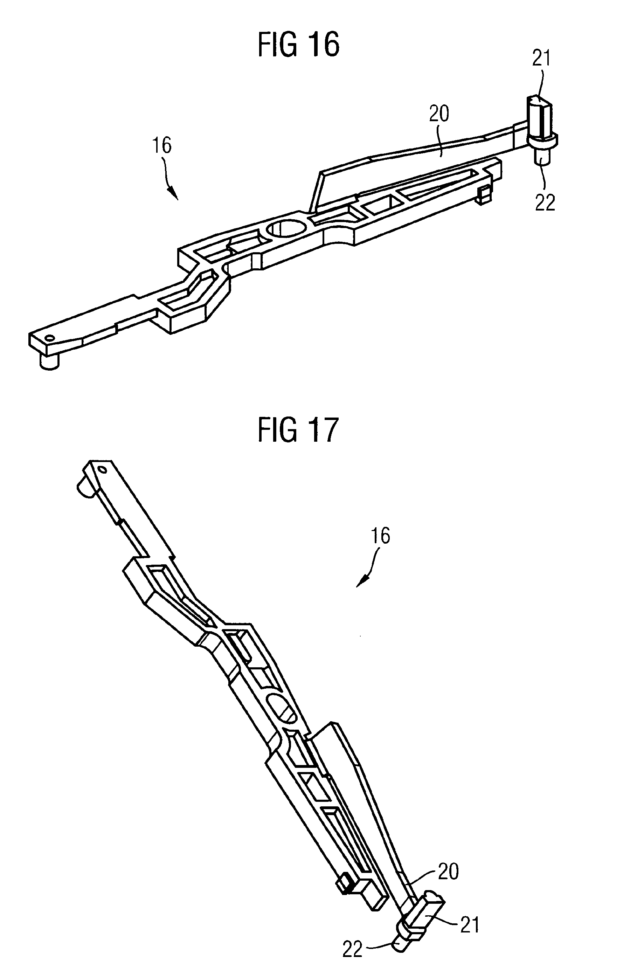

- Figur 16: eine perspektivische Ansicht des Verriegelungshebels nach Figur 13;
- Figur 17: eine zweite perspektivische Ansicht des Verriegelungshebels nach Figur 13;

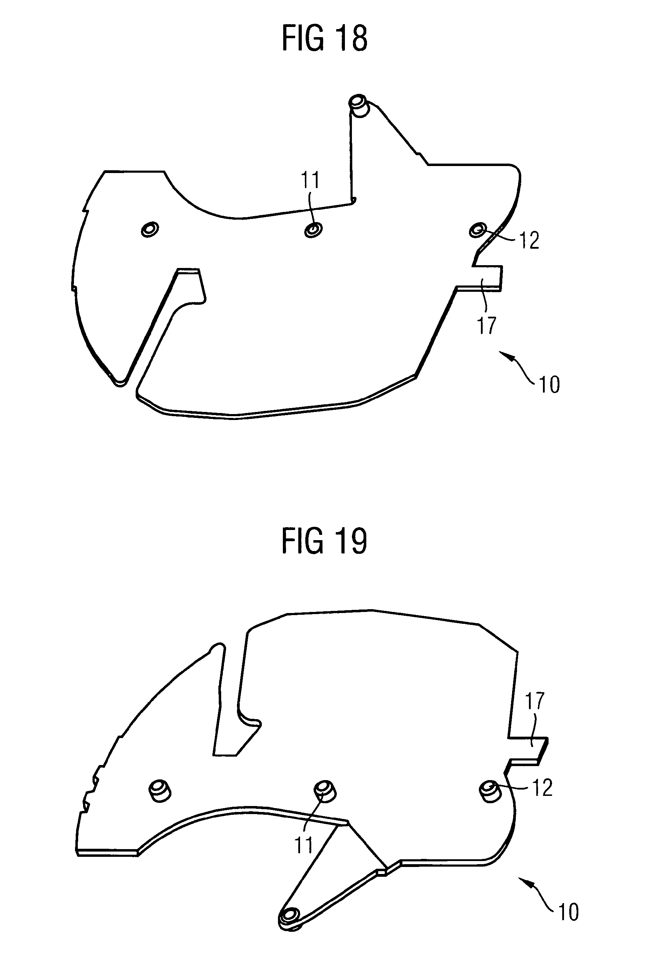

- Figur 18: eine perspektivische Vorderansicht eines Stellhebels;
- Figur 19: eine perspektivische Rückansicht eines Stellhebels nach Figur 18;

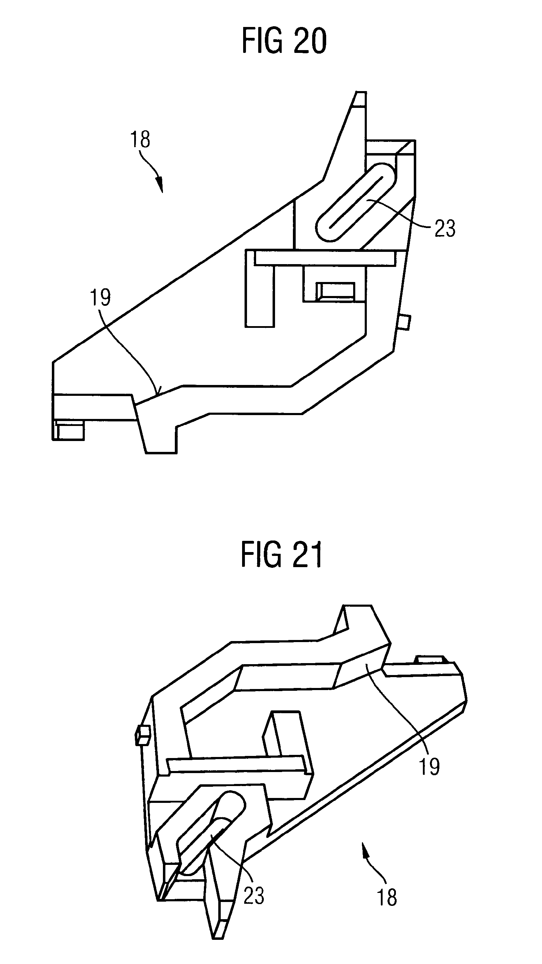

- Figur 20: eine Draufsicht eines Verriegelungsteils;
- Figur 21: eine perspektivische Ansicht des Verriegelungsteils nach Figur 20

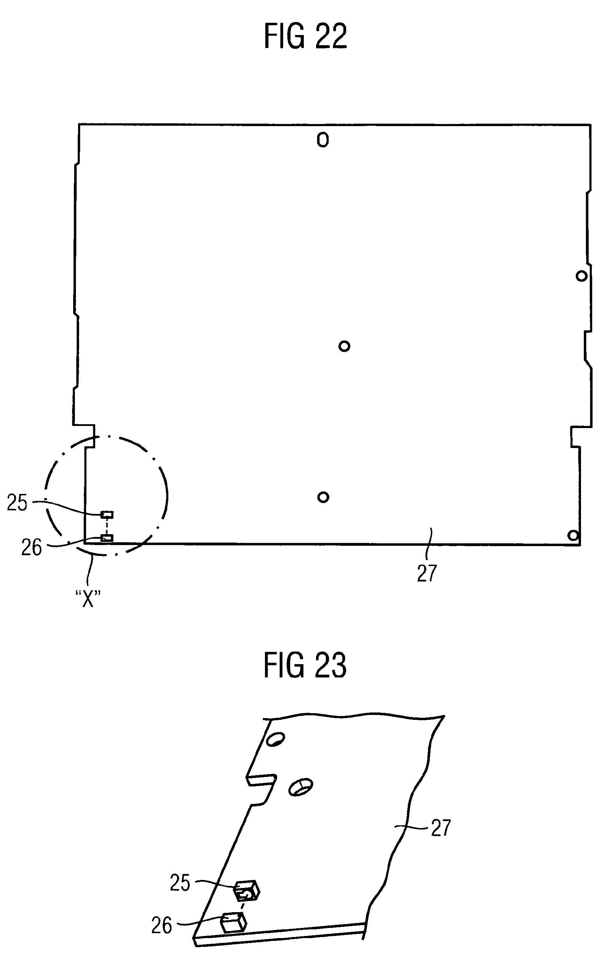

- Figur 22: eine Draufsicht einer Leiterplatte;
- Figur 23: einen vergrößerten Ausschnitt "X" der Leiterplatte nach Figur 22;

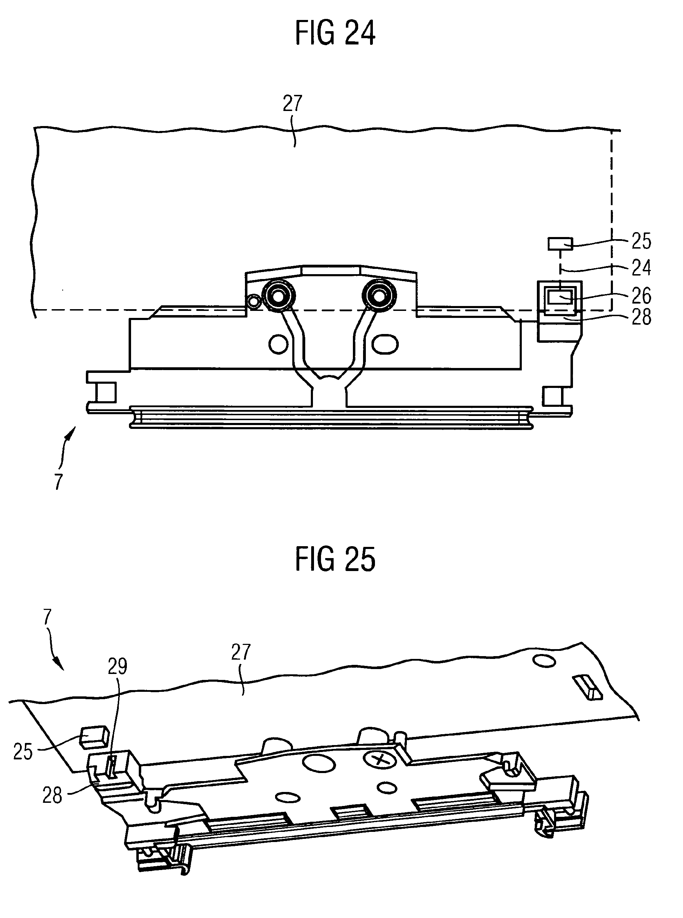

- Figur 24: eine Draufsicht eines Einführteils der Kartenaufnahmevorrichtung;
- Figur 25: eine perspektivische Unteransicht des Einführteils nach Figur 24;

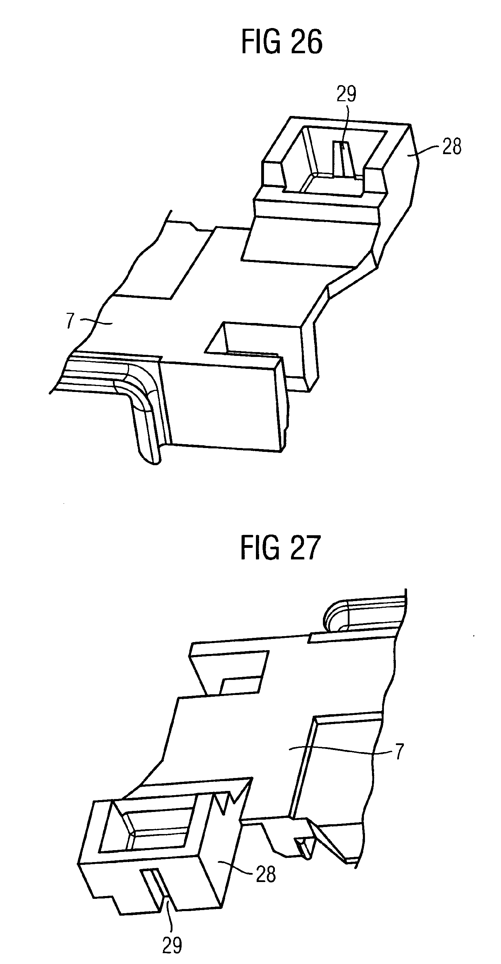

- Figur 26: einen vergrößerten Ausschnitt der Vorderansicht des Einführteils nach Figur 24 im Bereich eines Lichtkastens und
- Figur 27: den vergrößerten Ausschnitt des Einführteils nach Figur 26 in der Rückansicht.

Die dargestellte Kartenaufnahmevorrichtung weist einen Schlitten 1 mit einem Ausleger 2 auf, an dem eine sich in Bewegungsrichtung 4 einer Chipkarte 5 erstreckende Zahnstange 3 angeordnet ist.

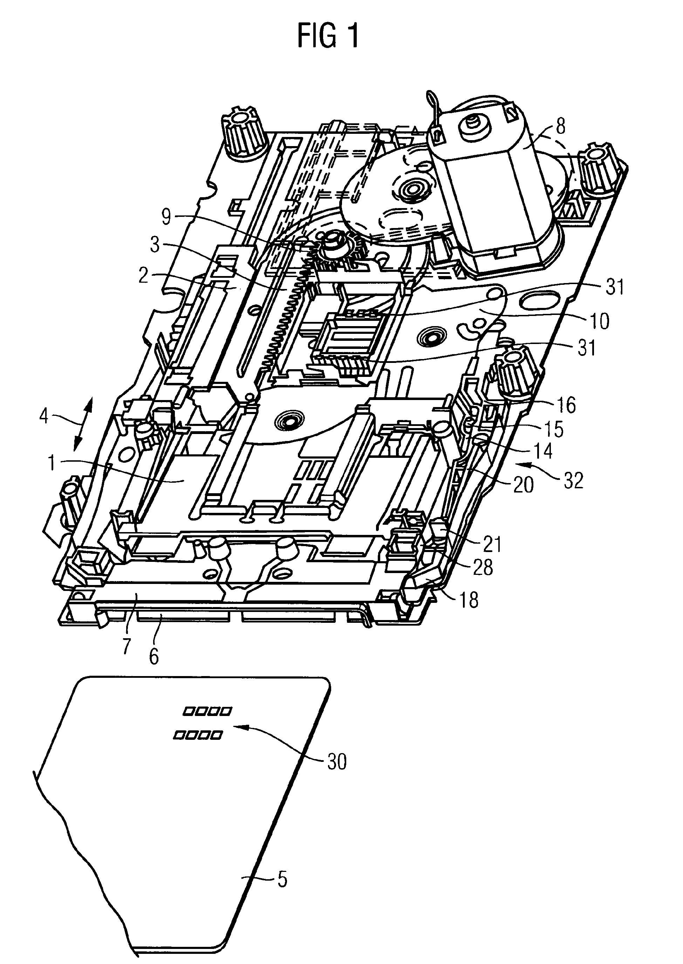

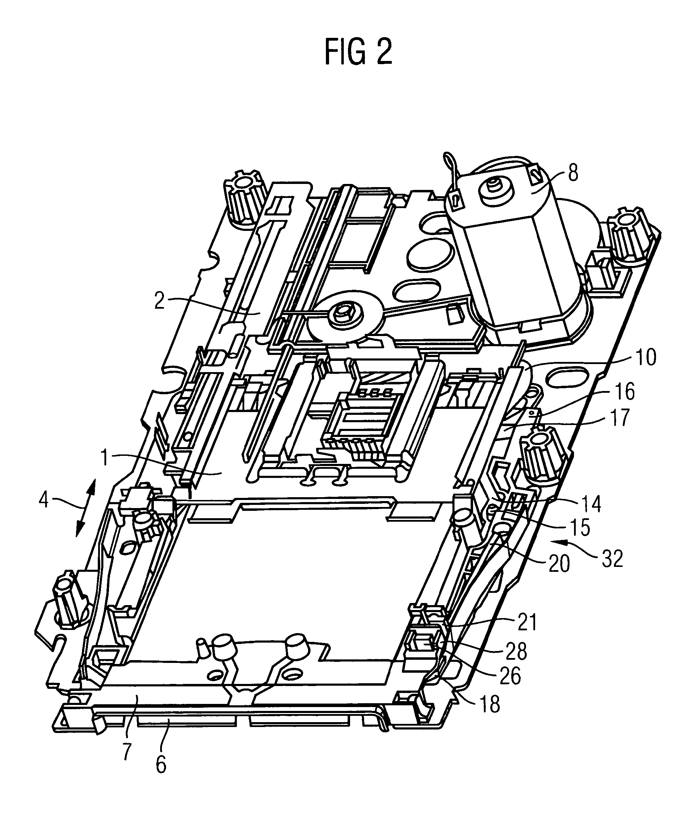

Der Schlitten 1 ist zwischen einer Aufnahmeposition (Figur 1) und einer Kontaktposition (Figur 2) in einem Aufnahmeschacht verschiebbar geführt.

Dazu wird die Chipkarte 5 durch einen Einführschlitz 6 eines feststehenden Einführteils 7 in den in seiner Aufnahmeposition befindlichen Schlitten 1 bis zur Anlage an Anschläge des Schlittens 1 eingeschoben.

Bei einer kurzen weiteren Einschiebebeaufschlagung der Chipkarte 5 erfolgt eine Betätigung eines nicht dargestellten zweiten Schalters und damit eine Auslösung eines zweiten Schaltsignals.

Durch dieses zweite Schaltsignal wird ein reversierbarer elektromotorischer Antrieb 8 in seiner einen Drehrichtung eingeschaltet.

Über ein Getriebe treibt der Antrieb 8 ein Antriebsritzel 9 an, das in Eingriff mit dem einen Ende der Zahnstange 3 steht und die Zahnstange 3 und mit ihr den Schlitten 1 in die Kontaktposition bewegt.

Da die Chipkarte 5 durch eine Klemmvorrichtung des Schlittens 1 gehalten wird, bewegt sie sich mit dem Schlitten 1 in die Kontaktposition.

Wird die Kontaktposition erreicht, kommt es zu einem Entkoppeln des Antriebsritzels 9 von der Zahnstange 3.

Der Antrieb 8 läuft aber weiter und beginnt zum Ende der Einzugsbewegung der Chipkarte 5 einen Drehantrieb eines Stellhebels 10 im Uhrzeigersinn um eine sich quer zur Bewegungsrichtung 4 der Chipkarte erstreckende Achse 11 zu drehen.

Ein zur Achse 11 paralleler Zapfen 12 greift in eine Kulissenführung 13 in dem einen Endbereich eines Verriegelungshebels 14 ein, der sich neben der rechten Seite der Bewegungsbahn des Schlittens 1 erstreckt und in seinem mittleren Bereich um eine zur Achse 11 parallele Schwenkachse 15 schwenkbar ist.

Durch die Bewegung des Zapfens 12 in der Kulissenführung 13 ist der Verriegelungshebel 14 aus seiner Entriegelungsstellung in seine Verriegelungsstellung im Uhrzeigersinn schwenkbar antreibbar.

Auf dem Verriegelungshebel 14 ist ein Arretierschieber 16 verschiebbar geführt angeordnet, der von einem sich etwa radial zur Achse 11 erstreckenden Steuerelement 17 nach dem Verschwenken des Verriegelungshebels 14 in die Verriegelungsstellung beaufschlagt und aus einer Entarretierstellung zur Einführschlitzseite hin in eine Arretierstellung verschoben wird.

An dem dem Einführschlitz 6 nahen Ende des Verriegelungshebels 14 ist ein Verriegelungsteil 18 fest angeordnet, das durch das Verschwenken des Verriegelungshebels 14 in seine Verriegelungsstellung mitgeschwenkt wird und dabei das nach außen gerichtete Ende der vollständig eingefahrenen Chipkarte 5 hakenartig hintergreift und dadurch in der Kartenaufnahmevorrichtung verriegelt.

Das Verriegelungsteil 18 beaufschlagt dabei das äußere Ende der Chipkarte 5 mit einer zur Bewegungsrichtung 4 rampenartig geneigten Anlagefläche 19, so dass im Falle einer nicht vollständig eingezogenen Chipkarte 5 diese durch die Schwenkbewegung des Verriegelungshebels 14 in die Verriegelungsstellung von der Anlagefläche 19 mit einer Bewegungskomponente in Einführrichtung beaufschlagt und vollständig in die Kartenaufnahmevorrichtung eingeschoben wird.

An dem Arretierschieber 16 ist über dessen zur Seite des Einführschlitzes 6 gerichtetes Ende frei hinausragend ein Federarm 20 angeordnet, an dessen freiem Ende sowohl eine Strahlunterbrechungsfahne 21 als auch ein sich parallel zur Achse 11 erstreckender Führungsbolzen 22 angeordnet sind.

Der Führungsbolzen 22 ragt in eine Führungsnut 23 des Verriegelungsteils 18, die sich etwa parallel zu Anlagefläche 19 erstreckt.

Durch die Verschiebung des Arretierschiebers 16 aus der Entarretierstellung in die Arretierstellung wird auch der Führungsbolzen 22 in der Führungsnut 23 verschoben, so dass die Strahlunterbrechungsfahne 21 eine Bewegung mit einer quer zur Bewegungsrichtung 4 gerichteten Bewegungskomponente durchführt, sich quer in den Bereich eines Lichtstrahls 24 bewegt und diesen unterbricht.

Der Lichtstrahl wird in Bewegungsrichtung 4 von einer als LED ausgebildeten Lichtquelle 25 ausgesandt und ist zu einem Lichtempfänger 26 gerichtet.

Lichtquelle 25 und Lichtempfänger 26 sind auf einer ortsfesten Leiterplatte 27 angeordnet.

Der Lichtempfänger 26 befindet sich in einem Lichtkasten 28, der einteilig mit dem Einführteil 7 ausgebildet ist.

In dem Strahlverlauf von der Lichtquelle 25 zum Lichtempfänger 26 ist in dem Lichtkasten 28 eine Blendenöffnung 29 ausgebildet, so dass der Lichtstrahl 24 zum Lichtempfänger 26 gelangen kann.

In der Arretierstellung des Arretierschiebers 16 ist aber die Strahlunterbrechungsfahne 21 vor die Blendenöffnung 29 gefahren und unterbricht den Lichtstrahl 24. Dies führt dazu, dass der Lichtempfänger 26 ein erstes Schaltsignal abgibt, wodurch der Antrieb 8 gestoppt wird.

In der Arretierstellung arretiert weiterhin der Arretierschieber 16 die aus Verriegelungshebel 14, Arretierschieber 16 und Verriegelungsteil 18 bestehende Verriegelungseinheit 32 in ihrer Verriegelungsstellung.

In der Kontaktposition der Chipkarte 5 ist ein auf der Chipkarte 5 angeordneter Datenspeicher 30 mit feststehenden Kontakten 31 der Kartenaufnahmevorrichtung kontaktiert, so dass die Daten des Datenspeichers 30 in eine nicht dargestellte Lese- und Speichereinheit eines elektronischen Fahrtschreibers eingelesen werden können.

Gelangt bei dem Verriegelungsantrieb die Strahlungunterbrechungsfahne 21 nicht bis in ihre den Lichtstrahl 24 unterbrechende Position und hält diese Situation eine bestimmte Zeit an, wird der Antrieb 8 in entgegengesetzte Richtung angesteuert.

Es wird dann, wie bei einer manuellen Entnahmeansteuerung der oben beschriebene Ablauf in umgekehrter Reihenfolge durchgeführt und die Chipkarte wieder durch den Schlitten 1 nach außen gefahren, um entnommen werden zu können.

## Patentansprüche

1. Kartenaufnahmevorrichtung, insbesondere für einen Fahrtschreiber in einem Kraftfahrzeug, mit einer Aufnahmeöffnung, durch die eine Karte in einen Aufnahmeschacht einführbar ist, wobei die Karte einen Datenspeicher (30) aufweist, der bei vollständig in dem Kartenschacht befindlicher Karte mit feststehenden Kontakten (31) kontaktierbar und mit einer elektronischen Lese- und Speichereinheit verbindbar ist, mit einer Verriegelungseinheit, die mindestens ein als Verriegelungshebels (14) ausgebildetes Verriegelungselement aufweist, das zwischen einer Entriegelungsstellung und einer Verriegelungsstellung bewegbar ist und durch das ein Verriegelungsteil (18) zwischen einer Einführstellung und einer Verschlussstellung bewegbar antreibbar ist, wobei durch das bei vollständig in den Aufnahmeschacht eingeführter Karte in der Verschlussstellung befindliche Verriegelungsteil (18) die Aufnahmeöffnung verschlossen und das Verriegelungsteil (18) in der Verschlussstellung arretierbar ist und die Verriegelungseinheit (32) einen um eine Schwenkachse (15) zwischen einer Entriegelungsstellung und einer Verriegelungsstellung schwenkbar antreibbaren Verriegelungshebel (14) aufweist, an dessen einem Endbereich das Verriegelungsteil (18) angeordnet ist, durch das in der Verriegelungsstellung das nach außen gerichtete Ende der vollständig in dem Kartenschacht befindlichen Karte hakenartig hintergriffen ist und wobei ein Arretierschieber (16) auf dem Verriegelungshebel (14) annähernd tangential zur Drehbewegung des Stellhebels (10) zwischen einer Entarretierstellung und einer Arretierstellung verschiebbar geführt ist, wobei ein erster Schalter bei Befinden des arretierten Verriegelungsteils (18) in der Verschlussstellung schaltbar und ein erstes Schaltsignal auslösbar ist, wobei der Schalter ein fest angeordneter optischer Schalter mit einem Lichtempfänger (26) und einer Lichtquelle (25) ist und der von der Lichtquelle (25) zum Lichtempfänger (26) gerichtete Lichtstrahl (24) durch ein Schaltelement unterbrechbar ist, das an dem freien Ende eines sich annähernd in Bewegungsrichtung (4) der Karte erstreckenden Federarms (20) des Arretierschiebers (16) angeordnet ist, wobei durch den Endhub des Arretierschiebers (16) in seine Arretierstellung das Schaltelement in seine den Lichtstrahl (24) unterbrechende Position bewegbar ist, **dadurch gekennzeichnet, dass** der Federarm (20) auch eine von der Bewegungsrichtung des Arretierschiebers (16) abweichende, durch eine Führung des Schaltelements bestimmte Bewegung des Schaltelements durchführt.

2. Kartenaufnahmevorrichtung nach Anspruch 1 **dadurch gekennzeichnet, dass** das Schaltelement eine in den Weg des Lichts des optischen Schalters bewegbare Strahlunterbrechungsfahne (21) ist.

3. Kartenaufnahmevorrichtung nach einem der Ansprüche 1 und 2, **dadurch gekennzeichnet, dass** der Lichtempfänger (26) in einem Lichtkasten (26) angeordnet ist, der eine zur Lichtquelle (25) gerichtete Blendenöffnung (29) aufweist.

4. Kartenaufnahmevorrichtung nach einem der vorhergehenden Ansprüche, **dadurch gekennzeichnet, dass** das Schaltelement in der Führung in den Weg des Lichts des optischen Schalters bewegbar geführt ist.

5. Kartenaufnahmevorrichtung nach einem der vorhergehenden Ansprüche, **dadurch gekennzeichnet, dass** das Verriegelungsteil (18) in der Schließstellung mit einer zur Bewegungsrichtung (4) der Karte rampenartig geneigten Anlagefläche (19) an dem nach außen gerichteten Ende der vollständig in dem Kartenschacht befindlichen Karte in Anlage ist.

6. Kartenaufnahmevorrichtung nach einem der vorhergehenden Ansprüche, **dadurch gekennzeichnet, dass** der Verriegelungshebel (14) von einem um eine sich quer zur Bewegungsrichtung (4) der Karte erstreckende Achse (11) reversierbar schwenkbar antreibbaren Stellhebel (10) zwischen der Entriegelungsstellung und der Verriegelungsstellung schwenkbar antreibbar ist.

7. Kartenaufnahmevorrichtung nach einem der vorhergehenden Ansprüche, **dadurch gekennzeichnet, dass** der Verriegelungshebel (14) eine Kulissenführung (13) aufweist, in die ein parallel zur Achse (11) gerichteter Zapfen (12) des Stellhebels (10) ragt und durch Drehung des Stellhebels (10) der Verriegelungshebel (14) durch den Zapfen (12) schwenkbar antreibbar ist.

8. Kartenaufnahmevorrichtung nach einem der vorhergehenden Ansprüche, **dadurch gekennzeichnet, dass** der Arretierschieber (16) einen ersten Anschlag aufweist, der bei Bewegung des Verriegelungshebels (14) in die Verriegelungsstellung nach Erreichen der Verriegelungsstellung von einem radial sich erstreckenden Steuerelement (17) des Stellhebels (10) zur Arretierstellung hin bewegbar beaufschlagbar ist und der einen zweiten Anschlag aufweist, der bei Bewegung des Verriegelungshebels (14) in die Entriegelungsstellung von dem Steuerelement (17) zur Entarretierstellung hin bewegbar beaufschlagbar ist.

9. Kartenaufnahmevorrichtung nach einem der vorhergehenden Ansprüche, **dadurch gekennzeichnet, dass** die Karte manuell in einen in einer Aufnahmeposition befindlichen Schlitten (1) einführbar und von dem bewegbar geführten Schlitten (1) aus der Aufnahmeposition in die die Kontakte kontaktierende Kontaktposition im Aufnahmeschacht sowie von der Kontaktposition in die Aufnahmeposition transportierbar ist.

10. Kartenaufnahmevorrichtung nach Anspruch 9, **dadurch gekennzeichnet, dass** der Schlitten (1) von einem reversierbaren Antrieb, insbesondere von einem elektromotorischen Antrieb (8) bewegbar antreibbar ist.

11. Kartenaufnahmevorrichtung nach Anspruch 10, **dadurch gekennzeichnet, dass** der Schlitten (1) eine sich in Bewegungsrichtung der Karte erstreckende Zahnstange (3) aufweist, in die ein reversierbar drehbar antreibbares Ritzel (9) eingreifbar ist.

12. Kartenaufnahmevorrichtung nach den Ansprüchen 6 und 11, **dadurch gekennzeichnet, dass** der Stellhebel (10) und das Ritzel (9) von dem Antrieb (8) um die Achse (11) drehbar antreibbar sind, wobei der Stellhebel (10) während des Schlittenantriebs und der Schlitten (1) während des Stellhebelantriebs vom Antrieb (8) entkoppelt ist.

13. Kartenaufnahmevorrichtung nach einem der Ansprüche 9 bis 12, **dadurch gekennzeichnet, dass** die Karte bis zur Anlage an einem Anschlag in den Schlitten (1) einführbar und nach Erreichen des Anschlags ein zweites Schaltsignal auslösbar ist, durch das der Antrieb (8) einschaltbar ist.

14. Kartenaufnahmevorrichtung nach Anspruch 13, **dadurch gekennzeichnet, dass** nach Erreichen des Anschlags von dem Schlitten (1) ein zweiter Schalter zur Auslösung des zweiten Schaltsignals betätigbar ist.

15. Kartenaufnahmevorrichtung nach einem der vorhergehenden Ansprüche, **dadurch gekennzeichnet, dass** von dem ersten Schaltsignal der Antrieb (8) ausschaltbar ist.

16. Kartenaufnahmevorrichtung nach einem der Ansprüche 10 bis 15, **dadurch gekennzeichnet, dass** bei Nichtvorliegen des ersten Schaltsignals nach einer von einem Zeitglied bestimmten Zeit nach Beginn des Antriebs (8) des Stellhebels (10) die Antriebsrichtung des Antriebs (8) umkehrbar ist.

## Claims

1. Card-receiving device, in particular for a tachograph in a motor vehicle, having a receiving opening through which a card can be inserted into a receiving slot, wherein the card has a data memory (30) which, when the card is completely located in the card slot, can be contacted with fixed contacts (31) and connected to an electronic reading and storage unit, having a locking unit which has at least one locking element configured as a locking lever (14) which can be moved between an unlocked position and a locked position and by means of which a locking part (18) can be movably driven between an insertion position and a closed position, wherein by means of the locking part (18), which is located in the closed position when the card is completely inserted in the receiving slot, the receiving opening is closed and the locking part (18) can be arrested in the closed position and the locking unit (32) has a locking lever (14) that can be pivotably driven about an axis of rotation (15) between an unlocked position and a locked position, at the one end region of which locking lever is arranged the locking part (18) by means of which in the locked position the outwardly directed end of the card completely located in the card slot is engaged behind in a hook-like manner and wherein an arresting slide (16) is guided displaceably on the locking lever (14) approximately tangentially to the rotational movement of the adjusting lever (10) between a released position and an arrested position, wherein a first switch can be operated when the arrested locking part (18) is located in the closed position and a first switching signal can be triggered, wherein the switch is a fixedly arranged optical switch with a light receiver (26) and a light source (25) and the light beam (24) directed from the light source (25) to the light receiver (26) can be interrupted by a switching element which is arranged on the free end of a spring arm (20) of the arresting slide (16) extending approximately in the movement direction (4) of the card, wherein through the final stroke of the arresting slide (16) into its arrested position, the switch element can be moved into its position interrupting the light beam (24), **characterized in that** the spring arm (20) also performs a movement of the switch element determined by a guide of the switch element and deviating from the movement direction of the arresting slide (16).

2. Card-receiving device according to Claim 1, **characterized in that** the switching element is a beaminterrupting lug (21) that can be moved into the path of the light of the optical switch.

3. Card-receiving device according to one of the Claims 1 and 2, **characterized in that** the light receiver (26) is arranged in a light box (28) which exhibits an aperture opening (29) turned towards the light source (25).

4. Card-receiving device according to one of the preceding claims, **characterized in that** the switching element can be movably guided in the guide in the path of the light of the optical switch.

5. Card-receiving device according to one of the preceding claims, **characterized in that** the locking part (18) in the closed position with a bearing surface (19) inclined in a ramp-like manner to the movement direction (4) of the card bears against the outwardly directed end of the card located completely in the card slot.

6. Card-receiving device according to one of the preceding claims, **characterized in that** the locking lever (14) is pivotably drivable by an adjusting lever (10) that can be driven reversibly and pivotably about an axis (11) extending transversely to the movement direction (4) of the card between the unlocked position and the locked position.

7. Card-receiving device according to one of the preceding claims, **characterized in that** the locking lever (14) exhibits a slotted guide (13) into which a pin (12) of the adjusting lever (10) directed parallel to the axis (11) projects and which is pivotably drivable by the pin (12) through rotation of the adjusting lever (10) of the locking lever (14).

8. Card-receiving device according to one of the preceding claims, **characterized in that** arresting slide (16) has a first stop which can be acted upon movably towards the arrested position when the locking lever (14) moves into the locked position once the locked position has been reached by a radially extending control element (17) of the adjusting lever (10) and a second stop which can be acted upon movably towards the released position during movement of the locking lever (14) into the released position by the control element (17).

9. Card-receiving device according to one of the preceding claims, **characterized in that** the card can be inserted manually in a carriage (1) located in a receiving position and transported by the movably guided carriage (1) from the receiving position into the contact position in contact with the contacts in the receiving slot and also from the contact position into the receiving position.

10. Card-receiving device according to Claim 9, **characterized in that** the carriage (1) can be movably driven by a reversible drive, in particular by an electromotive drive (8).

11. Card-receiving device according to Claim 10, **characterized in that** the carriage (1) has a rack (3) extending in the movement direction of the card, with which a reversibly rotatably driven pinion (9) can engage.

12. Card-receiving device according to Claims 6 and 11, **characterized in that** the adjusting lever (10) and the pinion (9) can be rotatably driven about the axis (11), wherein the adjusting lever (10) is uncoupled from the drive (8) during the carriage drive and the carriage (1) is uncoupled from the drive (8) during the adjusting lever drive.

13. Card-receiving device according to one of the Claims 9 to 12, **characterized in that** the card can be inserted in the carriage (1) until it bears against a stop and once the stop has been reached a second switching signal can be triggered, by means of which the drive (8) can be switched on.

14. Card-receiving device according to Claim 13, **characterized in that** once the stop has been reached by the carriage (1), a second switch can be actuated to trigger the second switching signal.

15. Card-receiving device according to one of the preceding claims, **characterized in that** the drive (8) can be switched off by the first switching signal.

16. Card-receiving device according to one of the Claims 10 to 15, **characterized in that** if there is no first switching signal, the drive direction of the drive (8) can be reversed after a time defined by a timing element after the start of the drive (8) of the adjusting lever (10).

## Revendications

1. Dispositif de réception de carte, notamment pour un tachygraphe dans une voiture automobile, comprenant une ouverture de réception, par laquelle une carte peut être introduite dans un puits de réception, la carte ayant une mémoire (30) de données, qui, lorsque la carte se trouve complètement dans le puits de carte, peut être mise en contact avec des contacts (31) fixes et être reliée à une unité électronique de lecture et de mémoire, comprenant une unité de verrouillage, qui a au moins un élément de verrouillage, qui est constitué sous la forme d'un levier (14) de verrouillage, qui est mobile entre une position de déverrouillage et une position de verrouillage et qui peut être entraîné par une pièce (18) de verrouillage en étant déplaçable entre une position d'introduction et une position de fermeture, dans lequel l'ouverture de réception est fermée par la pièce (18) de verrouillage se trouvant dans la position de fermeture, lorsque la carte est introduite complètement dans le puits de réception, et la pièce (18) de verrouillage peut être arrêtée dans la position de fermeture et l'unité (32) de verrouillage a un levier (14) de verrouillage, qui peut être entraîné en pivotant entre une position de déverrouillage et une position de verrouillage et à l'une des zones d'extrémité duquel est disposée la pièce (18) de verrouillage, par laquelle, en la position de verrouillage, l'extrémité, dirigée vers l'extérieur, de la carte se trouvant complètement dans le puits de réception, est prise par l'arrière à la manière d'un crochet, et dans lequel un coulisseau (16) d'arrêt est guidé de manière à coulisser sur le levier (14) de verrouillage à peu près tangentiellement au mouvement de rotation du levier (10) de réglage entre une position où il n'y a pas arrêt et une position d'arrêt, un premier commutateur pouvant, lorsque la pièce (18) de verrouillage arrêtée se trouve dans la position de fermeture, être commuté et un premier signal de commutation pouvant être déclenché, le commutateur étant un commutateur optique monté fixe et ayant un récepteur (26) de lumière et une source (25) lumineuse et le faisceau (24) lumineux allant de la source (25) lumineuse au récepteur (26) de lumière pouvant être interrompu par un élément de commutation, qui est disposé à l'extrémité libre d'un bras (20) de ressort, s'étendant à peu près dans la direction (4) de déplacement de la carte, du coulisseau (16) d'arrêt, dans lequel, par la course d'extrémité du coulisseau (16) d'arrêt venant dans sa position d'arrêt, l'élément de commutation peut venir dans sa position interrompant le faisceau (24) lumineux, **caractérisé en ce que** le bras (20) de ressort effectue aussi un déplacement de l'élément de commutation s'écartant de la direction de déplacement du coulisseau (16) d'arrêt et défini par un guidage de l'élément de commutation.

2. Dispositif de réception de carte suivant la revendication 1, **caractérisé en ce que** l'élément de commutation est un drapeau (21) d'interruption du faisceau mobile dans le trajet de la lumière du commutateur optique.

3. Dispositif de réception de carte suivant l'une des revendications 1 et 2, **caractérisé en ce que** le récepteur (26) de lumière est disposé dans une boîte (28) à lumière, qui a une ouverture (29) de diaphragme dirigée vers la source (25) lumineuse.

4. Dispositif de réception de carte suivant l'une des revendications précédentes, **caractérisé en ce que** l'élément de commutation peut, dans le guidage, venir dans le chemin de la lumière du commutateur optique.

5. Dispositif de réception de carte suivant l'une des revendications précédentes, **caractérisé en ce que**, dans la position de fermeture, la pièce (18) de verrouillage est, par une surface (19) de contact inclinée à la manière d'une rampe par rapport à la direction (4) de déplacement de la carte, en contact avec l'extrémité dirigée vers l'extérieur de la carte se trouvant complètement dans le puits de carte.

6. Dispositif de réception de carte suivant l'une des revendications précédentes, **caractérisé en ce que** le levier (14) de verrouillage peut être entraîné en pivotement entre la position de déverrouillage et la position de verrouillage par un levier (10) de réglage pouvant être entraîné en pivotement de manière réversible autour d'un axe (11) s'étendant transversalement à la direction (4) de déplacement de la carte.

7. Dispositif de réception de carte suivant l'une des revendications précédentes, **caractérisé en ce que** le levier (14) de verrouillage a un guidage (13) à coulisse, dans lequel pénètre un tenon (12), dirigé parallèlement à l'axe (11), du levier (10) de réglage et peut être entraîné en pivotement par le tenon (12) par la rotation du levier (10) de réglage du levier (14) de verrouillage.

8. Dispositif de réception de carte suivant l'une des revendications précédentes, **caractérisé en ce que** le coulisseau (16) d'arrêt a une première butée, qui, lorsque le levier (14) de verrouillage vient dans la position de verrouillage après avoir atteint la position de verrouillage, peut être déplacée par un élément (17) de commande, s'étendant radialement, du levier (10) de réglage pour venir dans la position d'arrêt et qui a une deuxième butée, qui, lorsque le levier (14) de verrouillage vient dans la position de déverrouillage, peut être déplacée par l'élément (7) de commande pour venir dans la position où il n'y a pas d'arrêt.

9. Dispositif de réception de carte suivant l'une des revendications précédentes, **caractérisé en ce que** la carte peut être introduite manuellement dans un chariot (1) se trouvant dans une position de réception et peut, à partir du chariot (1) guidé de manière à pouvoir être déplacé, passer de la position de réception dans la position de contact contactant les contacts dans le puits de réception, ainsi que de la position de contact dans la position de réception.

10. Dispositif de réception de carte suivant la revendication 9, **caractérisé en ce que** le chariot (1) peut être entraîné avec possibilité de se déplacer par un entraînement réversible, notamment par un entraînement (8) à moteur électrique.

11. Dispositif de réception de carte suivant la revendication 10, **caractérisé en ce que** le chariot (1) a une crémaillère (3), qui s'étend dans la direction de déplacement de la carte et dans laquelle engrène un pignon (9) pouvant être entraîné en rotation de manière réversible.

12. Dispositif de réception de carte suivant l'une des revendications 6 et 11, **caractérisé en ce que** le levier (10) de réglage et le pignon (9) peuvent être entraînés en rotation autour de l'axe (11) par l'entraînement (8), le levier (10) de réglage étant découplé de l'entraînement (8) pendant l'entraînement du chariot et le chariot (1) pendant l'entraînement du levier de réglage.

13. Dispositif de réception de carte suivant l'une des revendications 9 à 12, **caractérisé en ce que** la carte peut être introduite jusqu'à venir en contact avec une butée dans le chariot (1) et, après avoir atteint la butée, un deuxième signal de commutation peut être déclenché par lequel l'entraînement (8) peut être enclenché.

14. Dispositif de réception de carte suivant la revendication 13, **caractérisé en ce que**, après que le chariot (1) a atteint la butée, un deuxième commutateur peut être actionné pour le déclenchement du deuxième signale de commutation.

15. Dispositif de réception de carte suivant l'une des revendications précédentes, **caractérisé en ce que** l'entraînement (8) peut être désenclenché par le premier signal de commutation.

16. Dispositif de réception de carte suivant l'une des revendications 10 à 15, **caractérisé en ce que**, s'il n'y a pas le premier signal de commutation après un temps déterminé par un organe de temporisation après le début de l'entraînement (8) du levier (10) de réglage, le sens de l'entraînement (8) peut être inversé.
